(19) Europäisches Patentamt
European Patent Office
Office européen des brevets

(11) **EP 1 323 912 B1**

(12) **EUROPEAN PATENT SPECIFICATION**

(45) Date of publication and mention
of the grant of the patent:
**19.09.2007 Bulletin 2007/38**

(51) Int Cl.:
*F02D 33/02* *(2006.01)*      *F02D 23/00* *(2006.01)*
*F02B 37/12* *(2006.01)*      *F02D 41/00* *(2006.01)*

(21) Application number: **02102766.9**

(22) Date of filing: **16.12.2002**

(54) **Method for controlling the boost pressure of a turbocharged internal combustion engine**

Verfahren zur Steuerung des Ladedrucks einer aufgeladenen Brennkraftmaschine

Procédé pour commander la pression de suralimentation d'un moteur à combustion interne suralimenté

(84) Designated Contracting States:
**DE FR IT**

(30) Priority: **21.12.2001 LU 90867**

(43) Date of publication of application:
**02.07.2003 Bulletin 2003/27**

(73) Proprietor: **Delphi Technologies, Inc.**
**Troy, MI 48007 (US)**

(72) Inventors:
• **Barthelet, Pierre**
**6791 ATHUS (BE)**
• **Ghezzi, Olivier**
**57330 Hettange-Grande (FR)**

• **Voncken, Claude**
**5954, ITZIG (LU)**

(74) Representative: **Beissel, Jean et al**
**Office Ernest T. Freylinger S.A.,**
**234, route d'Arlon,**
**B.P. 48**
**8001 Strassen (LU)**

(56) References cited:
**EP-A- 0 952 324      EP-A- 1 101 917**
**US-A- 5 829 254      US-B1- 6 256 992**

• **PATENT ABSTRACTS OF JAPAN vol. 2002, no. 04, 4 August 2002 (2002-08-04) & JP 2001 342840 A (MITSUBISHI MOTORS CORP), 14 December 2001 (2001-12-14)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

*Field of the invention*

The present invention generally relates to a method for controlling the boost pressure of an internal combustion engine equipped with an exhaust-gas turbocharger.

*Background of the invention*

An exhaust-gas turbocharger generally consists of a turbine and a compressor installed on a single shaft. The turbine uses the energy of the exhaust-gases to drive the compressor. The compressor, in turn, draws in fresh air, which it supplies to the engine cylinders in compressed form.

Modern exhaust-gas turbochargers generally include a governing mechanism, that permits to control a desired boost pressure level throughout the engine's operating range. One type of such a governing mechanism is the so-called "wastegate", generally taking the form of a valve or flap, by means of which a portion of the engine's exhaust gases can be routed past the turbine. The available energy is exploited more efficiently by governing mechanisms incorporating turbines with variable geometry, such as e.g. a multi-vane diffuser. It allows to modify the turbine's flow resistance continuously to achieve a maximum utilization of the exhaust energy under all operating conditions.

An exhaust-gas turbocharger with a governing mechanism is generally controlled by a closed-loop regulation based on intake manifold air pressure. Typically, in electronically controlled engines, a "reference map" of the reference boost pressures, required to achieve desired engine performance at normal atmospheric pressures (generally about sea level) is stored in the electronic control unit. Based on engine speed and engine load, a reference boost pressure is looked up from this reference map and used as a desired boost pressure, i.e. as target pressure. Then, based on a comparison between the desired boost pressure and the intake manifold air pressure (i.e. the actual boost pressure), the closed-loop system adjusts the governing mechanism in such a way that the intake manifold air pressure reaches the desired boost pressure.

It is to be noted that variations in ambient conditions may alter the operating mode of the compressor. For example, an increase in altitude-causing the ambient pressure to decrease-will increase the pressure ratio (i.e. discharge pressure over inlet pressure) in the compressor if the boost pressure is maintained at the same level than at sea level atmospheric pressure. Such an increase of the pressure ratio may cause surging of the compressor or excessive spinning speeds of the compressor wheel, which can be very damaging.

In order to protect turbochargers from surging and excessive speeds, it is common practice to apply a limitation of boost pressure. Typically, a limit boost pressure is read out from a table in function of the measured ambient pressure. This limit boost pressure is then set as a superior limit for the boost pressure in the closed-loop regulation. Unfortunately, such a limitation requires an important calibration effort and leads to a loss of performance.

JP 2001 342840 describes a method for controlling an internal combustion engine comprising a supercharger, wherein the supercharging pressure is controlled so that the supercharger operates at a pressure ratio that remains at a preset margin below a surge limit pressure ratio depending on air flow rate.

*Object of the invention*

The object of the present invention is to provide an improved method for controlling the boost pressure of a turbocharged internal combustion engine, which allows improved engine performances while ensuring turbocharger protection. This object is achieved by a method as claimed in claim 1.

*Summary of the invention*

The present invention relates to a method for controlling the boost pressure of an internal combustion engine equipped with an exhaust -gas turbocharger. The turbocharger comprises a turbine in communication with an exhaust-gas manifold of the engine and a compressor connected to the turbine, the compressor being in communication with an air intake manifold of the engine. According to an important aspect of the invention, the intake manifold pressure is controlled in such a way that the pressure ratio in the compressor of the exhaust-gas turbocharger does not exceed a limit pressure ratio, which depends on a parameter representative of the air flow rate through the compressor.

So, contrary to the conventional practice which consists in using a constant limit pressure for compressor protection purposes, the present method takes into account the air flow through the compressor to define the limit pressure ratio in the compressor. As a matter of fact, surging or over-speeding appear above different pressure ratios, depending on the quantity of air flowing through the compressor. Therefore, by using a limit pressure ratio that depends on a parameter representative of the air flow through the compressor, the present method allows to control the boost pressure in function of the actual capabilities of the turbocharger, and not of an arbitrary limit. This also means that for a given ambient pressure, the limit pressure ratio-and thus the limit boost pressure that is obtained therefrom-will vary in function of the parameter representative of the air flow through the compressor.

It is clear that in the present method the values of limit pressure ratio will be chosen in such a way as to be in the stable operating range of the compressor for the corresponding air flow, as close as possible to the limits with the instable compressor operating ranges (i.e. surge and over-speed), however possibly including safety margins. From the limit pressure ratio and the upstream compressor pressure, the limit downstream compressor pressure may be determined. The limit boost pressure-that is not to be exceeded in the intake manifold to avoid an excessive pressure ratio in the compressor-can thus be determined on the basis of this limit downstream compressor pressure.

The present method thus allows an optimized control of boost pressure by taking into account the air flow rate in the compressor to obtain an adequate limitation of compressor pressure ratio. The compressor is thus efficiently protected against damaging operating conditions. In particular, the compressor is more efficiently protected against surging at low air flows and against over-speeding at high air flows. Moreover, engine performances are not unduly limited by a constant limit pressure selected on the basis of a compromise for engine operation between low and high engine speeds. As a result, engine performances and driving performances are improved.

The present method comprises a closed-loop regulation having as input parameters the intake manifold pressure and a desired boost pressure. The control of the boost pressure is preferably effected as follows. A reference boost pressure is read out from a reference map in function of engine speed and engine load. This reference map e.g. contains the reference boost pressure required for the actual engine speed and load at normal atmospheric pressure, i.e. at sea level. Moreover, an upstream compressor pressure and the parameter representative of the air flow through the compressor are determined, generally by measurement. Then, a limit compressor pressure ratio is read out from a limit pressure ratio map in function of the parameter representative of the air flow rate through the compressor. Based on this limit pressure ratio and the upstream compressor pressure a limit boost pressure that Is not to be exceeded in the intake manifold is determined, and the lesser of the reference boost pressure and the limit boost pressure is used as the desired boost pressure In the closed-loop regulation. The intake manifold air pressure is thus limited by its target value, i.e. the desired boost pressure. It follows that as long as the reference boost pressure does not exceed the limit boost pressure, it is this reference boost pressure that will be used as desired boost pressure.

The parameter representative of the air flow through the compressor may be the mass flow rate of fresh air measured in the intake line of the engine. Indeed, flow meters are a current features on electronically controlled engines. The term intake line herein generally designates the assembly of elements guiding the fresh air to the cylinders, upstream and downstream of the compressor.

Rather than the mass flow rate, the corrected mass flow rate is more preferably used as the parameter representative of the flow rate through the compressor. Such a corrected mass flow rate corresponds to the measured mass flow rate, corrected with regard to reference temperature and pressure. These reference temperature and pressure will generally be about 20°C and sea level atmospheric pressure (about 1 bar). It shall be appreciated that using the corrected mass flow rate allows to take into account the air pressure and temperature in the determination of the limit pressure ratio. Thereby a more accurate protection of the turbocharger is achieved, allowing a wider operating range for the turbocharger. At the design stage of the method, relevant limit pressure ratios that are to be stored in the limit pressure ratio map can readily be selected from the compressor map available from the turbocharger manufacturer.

In another embodiment, e.g. in case no flow meter is available, the parameter representative of the air flow through the compressor may be the engine speed. Indeed, in approximation, at full-load and for steady-state operation, there is a unique relationship between the air flow rate admitted in the engine and engine speed. In other words, engine speed is an acceptable image of the air flow through the engine and thus through the compressor, whereby it may be used as the parameter on which the limit pressure ratio depends.

The upstream compressor pressure used in the determination of the limit boost pressure may be the atmospheric pressure, e.g. measured by an external sensor. However, for improved accuracy, the upstream compressor pressure is preferably estimated as the difference between the atmospheric pressure and an estimated pressure loss in the intake line upstream of the compressor. The pressure loss in the intake line, mainly due to the air filter, generally varies as a cubic function of the air flow rate through the intake line.

Regarding the upstream compressor air temperature, the ambient air temperature measured by an external sensor may be used. However, the upstream compressor air temperature is preferably measured in the intake line.

In approximation, the limit boost pressure may be calculated as the product of the limit pressure ratio and the upstream compressor pressure. But, due to pressure losses in the intake line downstream of the compressor, e.g. in an intercooler, the limit boost pressure is preferably calculated as the difference between a limit downstream pressure and an estimation of the pressure loss in the intake line downstream of the compressor. Here again, this estimation allows a relatively good approximation of the air pressure at the compressor outlet.

It is to be noted that the method of the present invention is applicable to all types of exhaust-gas turbochargers. In case no governing mechanism is present, the compressor discharge pressure may be reduced by reducing the injected fuel quantity. It remains to be noted that the method of the present invention is applicable for controlling the boost pressure of turbochargers equipping diesel as well as gasoline engines.

## Brief description of the drawings

The present invention will now be described, by way of example, with reference to the accompanying drawings, in which:

Fig.1: shows a typical compressor map of an exhaust-gas turbocharger;

Fig.2: is a block diagram illustrating a preferred embodiment of the method of the invention.

## Detailed description of a preferred embodiment

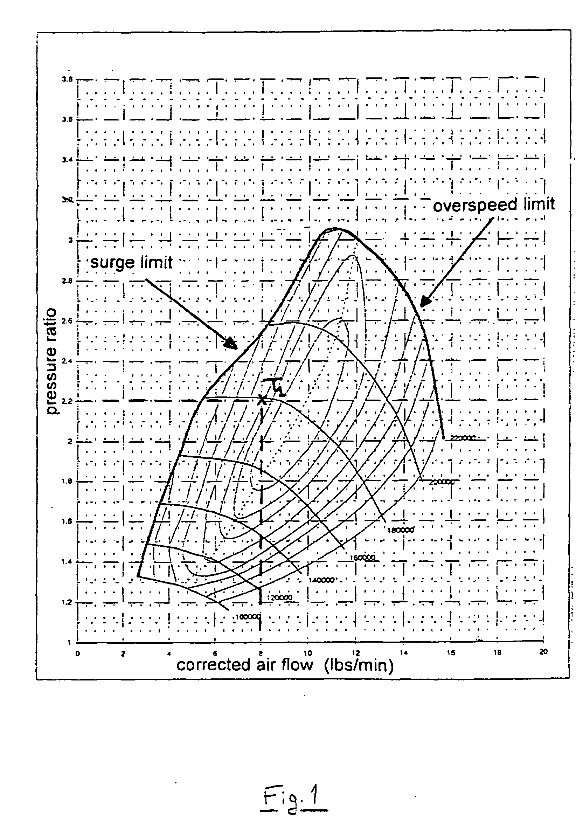

Fig.1 shows a traditional compressor map of an exhaust-gas turbocharger. The pressure ratio, i.e. compressor outlet pressure over compressor inlet pressure, is plotted against the air flow rate passing through the compressor. More exactly, the graduations on the horizontal axis indicate the corrected mass flow rate $W^*$ of air, which corresponds to the air mass flow rate $W$ corrected with regard to a reference temperature $T_{REF}$ and a reference pressure $P_{REF}$, according to the following formula:

$$W^* = W \frac{P_{REF}}{P_{IN}} \sqrt{\frac{T_{IN}}{T_{REF}}}$$

The parameters $T_{IN}$ and $P_{IN}$ represent the pressure and temperature of air at the compressor inlet. The reference temperature $T_{REF}$ lies in the range of ambient temperatures and the reference pressure $P_{REF}$ about sea level pressure. On the graph of Fig.1, the corrected air mass flow rate $W^*$ is given in lbs/min.

There are two sets of curves on the graph: efficiency curves (of oval shape) and compressor wheel rotating speed curves (rotating speed is indicated next to each curve). The area where there are lines drawn is the operating envelope. It is best to operate the compressor within this envelope. The thick line partially enclosing the operating envelope indicates, to the left, the surge limit, and to the right, the over-speed limit.

In an internal combustion engine equipped with an exhaust-gas turbocharger, the boost pressure is generally controlled in closed-loop by the Engine Control Unit (ECU) based on a comparison between a desired boost pressure and an intake manifold air pressure. In the case of turbochargers including a governing mechanism such as e.g. a multi-vane diffuser or a waste gate, the ECU operates the governing mechanism in such a way that the intake manifold air pressure reaches the desired boost pressure.

Supposing that for given engine speed and load, the required boost pressure, i.e. the intake manifold pressure, is 2.2 bars. In approximation, without considering pressure losses in the intake line, while driving at sea level (atmospheric pressure about 1 bar), the pressure ratio in the compressor amounts to 2.2. If in this case the mass air flow rate in the compressor is 8 lbs/min, it means that the compressor operates in the stable range: the corresponding operating point $T_1$ is shown on the graph in Fig.1.

From the definition of the pressure ratio, it is clear that for a given compressor outlet pressure, a decrease of compressor inlet pressure will cause an increase of the pressure ratio. Hence, a decrease of atmospheric pressure, e.g. due to driving in altitude, will cause an upward shift of the operating point for a same outlet pressure than at sea level. Referring again to the above example of a boost pressure demand of 2.2 bars, if the car was driven at an altitude of 1 500 m (atmospheric pressure about 0.85 bar), the pressure ratio would amount to about 2.6. As can be seen from the compressor map, this would cause the compressor to surge, since the point corresponding to a pressure ratio of 2.6 and a corrected mass flow rate $W^*$ of 8 lbs/min is above the surge limit.

Furthermore, as can be seen from the above formula giving $W^*$, variations of temperature and pressure also influence the corrected mass flow $W^*$ and thus cause a displacement of the operating point within the compressor map. In particular, an increase in ambient air temperature $T_{IN}$ causes an increase of the corrected mass flow rate, and thus a shift towards the right in the compressor map. An increase of ambient temperature can thus cause the compressor wheel to spin at excessive speeds.

To protect the turbochargers from surging and over-speeding due to variations in ambient conditions, the present method proposes to control the boost pressure in such a way that the compressor pressure ratio does not exceed a limit pressure ratio, which depends on a parameter representative of the air flow rate through the compressor.

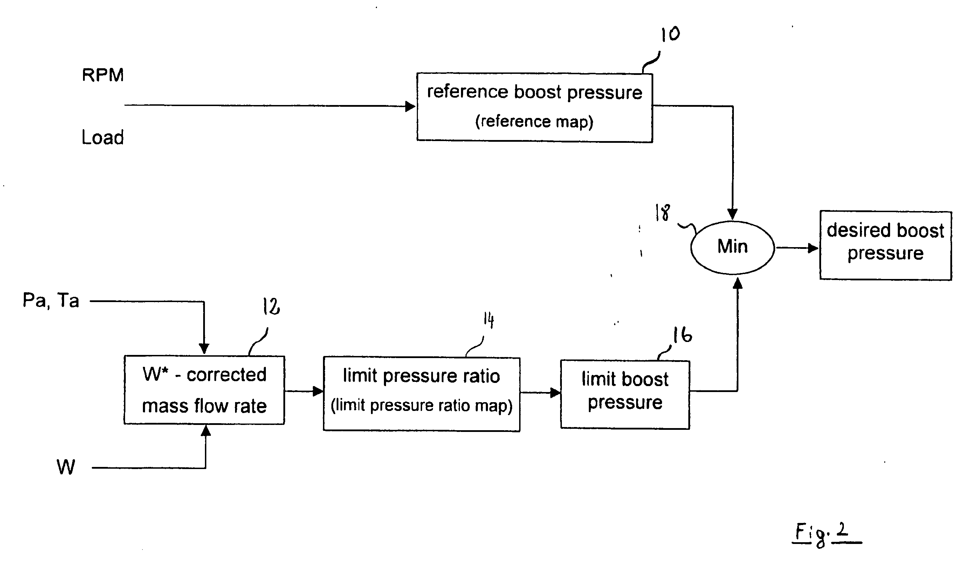

A preferred embodiment of the present method will now be described with regard to Fig.2, in which the parameter representative of the air flow rate through the compressor is the corrected mass flow rate $W^*$ calculated by means of the above formula.

On the one hand, as shown in Fig.2, a reference boost pressure is determined by look-up from a reference map 10 in function of the engine speed and engine load (respectively indicated "RPM" and "Load" in Fig.2), the reference map 10 being stored in the ECU. This reference map 10 comprises the required boost pressure values for the current engine speed and load for a normal pressure and a normal temperature value, e.g. 1 bar and 20°C.

On the other hand, a limit boost pressure is computed based on the ambient pressure and temperature and the actual mass flow rate. The ambient pressure Pa is preferably measured by means of an external sensor.

The air temperature Ta is preferably measured in the intake line upstream of the compressor. The mass flow rate W of intake air is preferably measured by a sensor in the intake line. Based on these three parameters Pa, Ta and W, the corrected mass flow rate W* is firstly calculated, as indicated in box 12. Then, a limit pressure ratio is looked up from a stored limit pressure ratio map 14 in function of the corrected mass flow rate W*. Based on this limit pressure ratio and the ambient pressure, a limit boost pressure is calculated in box 16. Finally, in block 18, the minimum of the limit boost pressure and the reference boost pressure is selected to be used as the desired boost pressure, i.e. the target boost pressure for the intake manifold. In other words, if the reference boost pressure can be reached without exceeding the limit pressure ratio, i.e. without risks of damage, the value of the reference boost pressure will be defined as the desired boost pressure. However, if the reference boost pressure happens to be greater than the limit boost pressure, it is the value of the limit boost pressure which will be defined as the desired boost pressure. This desired boost pressure will be used by the ECU as target value for the intake manifold air pressure.

It is to be noted that the limit pressure ratio map can be easily build from a compressor map. The values of limit pressure ratio will preferably be selected to be close to the separating line (thick line in the compressor map in Fig.1) delimiting the surge and over-speed zones from the stable operating range. One should advantageously include a safety margin while selecting theses values of limit pressure ratio to take into account dispersions that may result from manufacturing tolerances.

Now, referring more specifically to the determination of the limit boost pressure, some estimations will preferably be made to obtain an acceptable value thereof without adding extra sensors to implement the method. The minimal requirements in terms of sensor for the implementation of the present method are: an ambient pressure sensor, an intake air temperature sensor and an intake manifold pressure sensor. These are generally already provided on electronically controlled engines and need thus not be installed for this task.

The compressor inlet pressure $P_{IN}$ will preferably be estimated as the difference between the atmospheric pressure Pa and the estimated pressure loss in the air filter $\Delta P_F$, i.e. $P_{IN} = Pa - \Delta P_F$. The pressure loss in the air filter $\Delta P_F$ is typically a cubic function of the air flow through the air filter.

The corrected air flow rate W* is then calculated from the measured mass flow rate W, the measured air temperature Ta, and the estimated compressor inlet pressure $P_{IN}$. Next, the limit pressure ratio $R_{LIM}$ for the corrected mass flow rate W* is read out from the limit pressure ratio map and a limit compressor output pressure $P_{L\_OUT}$ is calculated as the product of the limit pressure ratio $R_{LIM}$ and the estimated compressor inlet pressure: $P_{L\_OUT} = R_{LIM} * P_{IN}$.

Now, the limit boost pressure is preferably determined while taking into account an estimation of the pressure downstream of the compressor, e.g. in an intercooler that will generally be provided between the turbocharger and the intake manifold. The limit boost pressure is estimated as the difference between the limit output pressure $P_{L\_OUT}$ and the pressure loss in the intercooler $\Delta P_{IC}$: $P_{LIM} = P_{L\_OUT} - \Delta P_{IC}$.

By using a limit pressure ratio which is function of the corrected air flow rate traversing the compressor, the present method allows to operate the turbocharger up to its limits, while remaining in the stable operating range. The present method thus permits to take advantage of the actual capabilities of the turbocharger, whereby engine performances can be improved.

## Claims

1. A method for controlling the boost pressure of an internal combustion engine comprising an exhaust-gas turbocharger and a closed-loop regulation having as input parameter the intake manifold pressure and a desired boost pressure, wherein the intake manifold pressure is controlled in such a way that the pressure ratio in the compressor of said exhaust-gas turbocharger does not exceed a limit pressure ratio, which depends on a parameter representative of the air flow rate through the compressor,
**characterized in that** said method comprises the steps of
reading out a reference boost pressure from a reference map based on engine speed and engine load;
determining an upstream compressor pressure and said parameter representative of the air flow rate through the compressor;
reading out a limit compressor pressure ratio from a limit pressure ratio map in function of said parameter representative of the air flow rate through the compressor;
determining a limit boost pressure based on said limit compressor pressure ratio and said upstream compressor pressure;
using the lesser of said reference boost pressure and said limit boost pressure as the desired boost pressure.

2. The method according to claim 1, **characterized in that** said parameter representative of the air flow rate through the compressor is the mass flow rate measured in the intake line.

3. The method according to claim 1, **characterized in that** said parameter representative of the air flow rate through the compressor is the corrected mass flow rate, which corresponds to the mass flow rate corrected with regard to reference pressure and temperature.

**4.** The method according to claim 1, **characterized in that** said parameter representative of the air flow rate through the compressor is engine speed.

**5.** The method according to any one of the preceding claims, **characterized in that** said upstream compressor air pressure is the atmospheric pressure.

**6.** The method according to any one of claims 1 to 4, **characterized in that** said upstream compressor pressure is estimated as the difference between the atmospheric pressure and an estimated pressure loss in the intake line upstream of said compressor.

**7.** The method according to any one of the preceding claims, **characterized in that** said limit boost pressure is the product of said limit pressure ratio and said upstream compressor pressure.

**8.** The method according to any one of the preceding claims, **characterized in that** said limit boost pressure corresponds to the difference between a limit downstream compressor pressure and an estimation of the pressure loss in said intake line downstream of said compressor.

**Patentansprüche**

**1.** Verfahren zur Regelung des Ladedrucks eines Verbrennungsmotors, das einen Abgasturbolader und eine Regelung mit geschlossenem Regelkreis umfasst, die als Eingangsparameter den Ansaugkrümmerdruck und einen Soll-Ladedruck aufweist, wobei der Ansaugkrümmerdruck in einer solchen Weise geregelt wird, dass das Druckverhältnis im Verdichter des Abgasturboladers ein Grenzdruckverhältnis nicht überschreitet, das von einem Parameter abhängt, der für den Luftdurchsatz durch den Verdichter repräsentativ ist,
**dadurch gekennzeichnet, dass** das Verfahren die folgenden Schritte umfasst:

Auslesen eines Referenzladedrucks aus einem Referenzkennfeld, basierend auf der Motordrehzahl und der Motorlast;
Ermitteln eines Drucks stromaufwärts des Verdichters und des Parameters, der für den Luftdurchsatz durch den Verdichter repräsentativ ist;
Auslesen eines Grenzverdichter-Druckverhältnisses aus einem Grenzdruckverhältnis-Kennfeld in Abhängigkeit von dem Parameter, der für den Luftdurchsatz durch den Verdichter repräsentativ ist;
Ermitteln eines Grenzladedrucks, basierend auf dem Grenzverdichter-Druckverhältnis und dem Druck stromaufwärts des Verdichters;

Verwenden des kleineren Drucks von dem Referenzladedruck und dem Grenzladedrucks als Soll-Ladedruck

**2.** Verfahren nach Anspruch 1, **dadurch gekennzeichnet, dass** der für den Luftdurchsatz durch den Verdichter repräsentative Parameter der Massendurchsatz ist, der in der Ansaugleitung gemessen wird.

**3.** Verfahren nach Anspruch 1, **dadurch gekennzeichnet, dass** der für den Luftdurchsatz durch den Verdichter repräsentative Parameter der korrigierte Massendurchsatz ist, der dem Massendurchsatz entspricht, der bezüglich Referenzdruck und Referenztemperatur korrigiert wurde

**4.** Verfahren nach Anspruch 1, **dadurch gekennzeichnet, dass** der für den Luftdurchsatz durch den Verdichter repräsentative Parameter die Motordrehzahl ist

**5.** Verfahren nach einem der vorhergehenden Ansprüche, **dadurch gekennzeichnet, dass** der Eingangsverdichter-Luftdruck der atmosphärische Druck ist

**6.** Verfahren nach einem der Ansprüche 1 bis 4, **dadurch gekennzeichnet, dass** der Druck stromaufwärts des Verdichters geschätzt wird als die Differenz zwischen dem atmosphärischen Druck und einem geschätzten Druckverlust in der Ansaugleitung stromaufwärts vom Verdichter

**7.** Verfahren nach einem der vorhergehenden Ansprüche, **dadurch gekennzeichnet, dass** der Grenzladedruck das Produkt aus dem Grenzdruckverhältnis und dem Druck stromaufwärts des Verdichters ist

**8.** Verfahren nach einem der vorhergehenden Ansprüche, **dadurch gekennzeichnet, dass** der Grenzladedruck der Differenz zwischen einem Grenzausgangs-Verdichterdruck und einer Schätzung des Druckverlustes in der Ansaugleitung stromabwärts vom Verdichter entspricht.

**Revendications**

**1.** Procédé de commande de la pression de suralimentation d'un moteur à combustion interne comprenant un turbocompresseur sur collecteur d'échappement et une régulation en boucle fermée ayant comme paramètre d'entrée la pression de collecteur d'admission et une pression de suralimentation souhaitée, dans lequel la pression de collecteur d'admission est commandée de telle sorte que le rapport de pression dans le compresseur dudit turbocompresseur sur collecteur d'échappement ne dépasse pas un rapport de pression limite, qui dépend d'un paramètre représentatif du débit d'air traversant le compresseur,

**caractérisé en ce que** ledit procédé comprend les étapes suivantes:

lire une pression de suralimentation de référence à partir d'une carte de référence sur la base d'une vitesse de moteur et d'une charge de moteur;

déterminer une pression en amont du compresseur et ledit paramètre représentatif du débit d'air traversant le compresseur;

lire un rapport de pression de compresseur limite à partir d'une carte de rapport de pression limite en fonction dudit paramètre représentatif du débit d'air traversant le compresseur;

déterminer une pression de suralimentation limite sur la base dudit rapport de pression de compresseur limite et de ladite pression en amont du compresseur;

utiliser la plus petite de ladite pression de suralimentation de référence et de ladite pression de suralimentation limite comme pression de suralimentation souhaitée

2. Procédé selon la revendication 1, **caractérisé en ce que** ledit paramètre représentatif du débit d'air traversant le compresseur est le débit massique mesuré dans la ligne d'admission

3. Procédé selon la revendication 1, **caractérisé en ce que** ledit paramètre représentatif du débit d'air traversant le compresseur est le débit massique corrigé, qui correspond au débit massique corrigé par rapport à la pression et à la température de référence

4. Procédé selon la revendication 1, **caractérisé en ce que** ledit paramètre représentatif du débit d'air traversant le compresseur est la vitesse du moteur

5. Procédé selon l'une quelconque des revendications précédentes, **caractérisé en ce que** ladite pression d'air de compresseur en amont est la pression atmosphérique.

6. Procédé selon l'une quelconque des revendications 1 à 4, **caractérisé en ce que** ladite pression en amont du compresseur est estimée comme différence entre la pression atmosphérique et une perte de pression estimée dans la ligne d'admission en amont dudit compresseur

7. Procédé selon l'une quelconque des revendications précédentes, **caractérisé en ce que** ladite pression de suralimentation limite est le produit dudit rapport de pression limite et de ladite pression en amont du compresseur

8. Procédé selon l'une quelconque des revendications précédentes, **caractérisé en ce que** ladite pression de suralimentation limite correspond à la différence entre une pression de compresseur limite en aval et une estimation de la perte de pression dans ladite ligne d'admission en aval dudit compresseur.

Fig. 1

RPM

Load

```
                                          ┌──────────────────────────┐ 10
                                          │ reference boost pressure │
                            ─────────────▶│     (reference map)      │
                                          └──────────────────────────┘
                                                        │
                                                        ▼
                                                    18 ╭─────╮      ┌──────────────┐
                                                       │ Min │─────▶│ desired boost│
                                                       ╰─────╯      │   pressure   │
                                                        ▲           └──────────────┘
                                                        │
Pa, Ta ──────────┐                                      │
                 ▼ 12                  14               16
         ┌────────────────┐   ┌────────────────────┐   ┌──────────────┐
         │ W* - corrected │──▶│ limit pressure ratio│──▶│ limit boost  │
         │ mass flow rate │   │(limit pressure ratio map)│  pressure   │
         └────────────────┘   └────────────────────┘   └──────────────┘
                 ▲
W ───────────────┘
```

*Fig. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001342840 A